## Europäisches Patentamt

## European Patent Office

## Office européen des brevets

(11) Veröffentlichungsnummer: **0 200 847**
A2

(12) **EUROPÄISCHE PATENTANMELDUNG**

(21) Anmeldenummer: **86100268.1**

(22) Anmeldetag: **10.01.86**

(51) Int. Cl.⁴: **H 04 M 15/28, H 04 M 17/02**

(30) Priorität: **28.03.85 CH 1356/85**

(43) Veröffentlichungstag der Anmeldung: **12.11.86**
**Patentblatt 86/46**

(84) Benannte Vertragsstaaten: **CH DE GB LI SE**

(71) Anmelder: **SODECO-SAIA AG, Postfach 420,
CH-1211 Genf 16 (CH)**

(72) Erfinder: **Junod, Philippe, 21, rue de Couvaloup,
CH-1162 St-Prex (CH)**

(74) Vertreter: **Pazeller, Friedrich et al, LGZ LANDIS & GYR
ZUG AG Konzern-Patentabteilung, CH-6301 Zug (CH)**

(54) Verfahren und Einrichtung zum Senden und zum Empfangen von trägerfrequenten Telephontaximpulsen.

(57) Telephontaximpulse werden von der Telephonzentrale gesendet und von einer Anruferstation empfangen, um anschliessend als Quittungsimpulse von der Anruferstation zurückgesendet und von der Telephonzentrale empfangen zu werden. Beim Fehlen von Quittungsimpulsen unterbricht die Telephonzentrale das Telephongespräch. Die dazu benötigte Sende/Empfangs-Einrichtung enthält einen Umschalter (1), einen Impedanzwandler (2), ein Bandpaßfilter (3), einen Hochfrequenz-Generator (4), einen Frequenzteiler (5), einen Pegel-Regelverstärker (6), einen Komparator (7), zwei Ein/Aus-Schalter (8, 12), einen Phasenregelkreis (9), der aus einem Phasenkomparator (16) und einem steuerbaren Oszillator (17) besteht, ein Differenzglied (10), einen Verstärker (11), ein RC-Glied (13), eine Impulspegel-Aufbereitungsschaltung (14) mit zwei Komparatoren (18, 19) und einem Differenzverstärker (20) sowie einen einstellbaren Widerstand (R2). Eine Empfangs-Trägerfrequenz wird mit Hilfe des Phasenregelkreises (9) ermittelt, der periodisch kurzzeitig mit Hilfe einer Sende-Trägerfrequenz geeicht wird, die von einem Generator (4; 5) erzeugt wird.

Verfahren und Einrichtung zum Senden und zum Empfangen von trägerfrequenten Telephontaximpulsen

Die Erfindung bezieht sich auf ein Verfahren und eine Einrichtung zum Senden und zum Empfangen von trägerfrequenten Telephontaximpulsen gemäss dem Oberbegriff des Anspruchs 1 bzw. des Anspruchs 6.

Bekannt sind Telephontaxsysteme, in denen trägerfrequente Telephontaximpulse nur in eine Richtung von der Telephonzentrale zur Anruferstation übertragen werden und dementsprechend Sender nur in den Telephonzentralen und Empfänger nur in den Telephonstationen vorhanden sind. Die Trägerfrequenz der Telephontaximpulse ist dabei z.B. 12 kHz. Ein derartiges System mit dem dazugehörigen Verfahren und der dazugehörigen Einrichtung ist aus der Druckschrift "Das 12 kHz-Gebührenmeldersystem" der schweizerischen PTT-Betriebe, 1973, bekannt. Die empfangenen Telephontaximpulse dienen entweder dazu, in der Anruferstation die Sprechgebühr durch Zählen der Telephontaximpulse zu ermitteln und dann mechanisch oder optisch anzuzeigen, oder dazu, einen noch vorhandenen Kredit in Telephonstationen mit Vorbezahlung zu reduzieren.

Der Erfindung liegt die Aufgabe zugrunde, das bekannte Verfahren und die bekannte Einrichtung zum Senden und Empfangen von trägerfrequenten Telephontaximpulsen preisgünstig so zu verbessern, dass die Anruferstation nach dem Empfang eines jeden Telephontaximpulses einen Quittungsimpuls zur Telephonzentrale zurücksendet und die Telephonzentrale bei einem Fehlen von Quittungsimpulsen das Telephongespräch unterbrechen kann. Dies verhindert den Missbrauch von Telephonstationen mit Vorbezahlung durch z.B. Anschliessen eines persönlichen Telephons an die Verbindung zwischen Anruferstation und Telephonzentrale.

Die genannte Aufgabe wird erfindungsgemäss durch die im Kennzeichen des Anspruchs 1 bzw. des Anspruchs 6 angegebenen Merkmale gelöst.

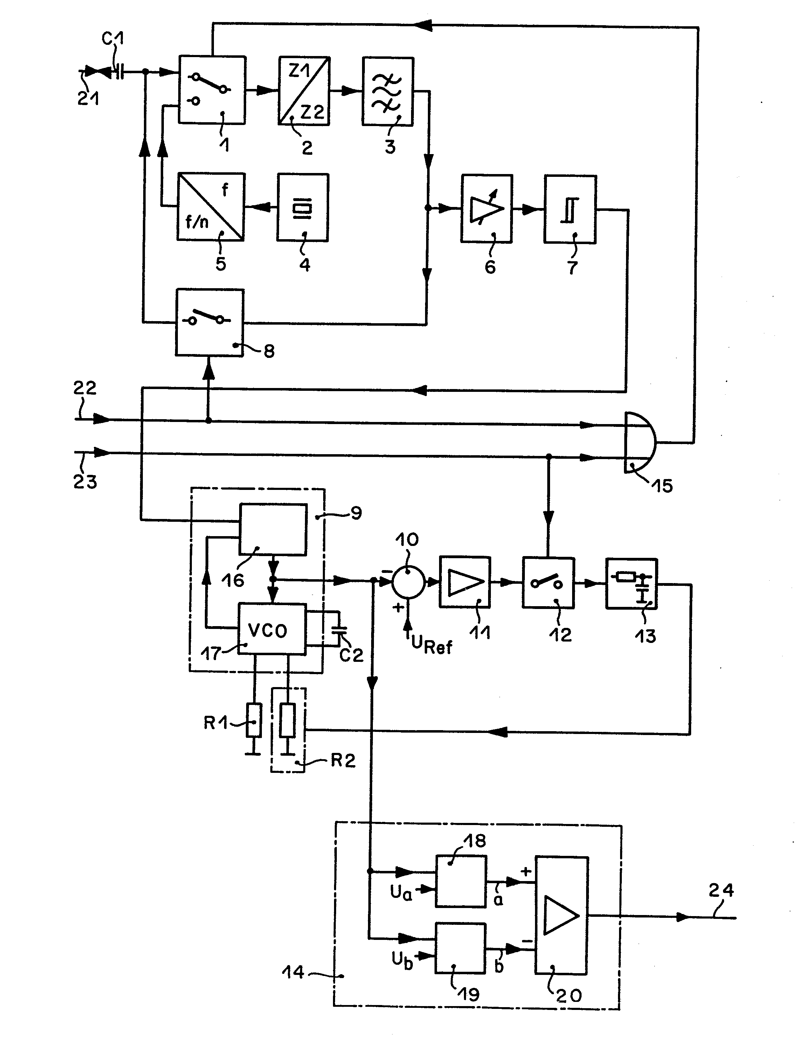

Ein Ausführungsbeispiel der Erfindung ist in der Zeichnung dargestellt und wird im folgenden näher beschrieben.

./.

Es zeigt die einzige Figur ein Blockschaltbild einer Sende/Empfangs-Einrichtung für trägerfrequente Telephontaximpulse.

Die in der Figur dargestellte Sende/Empfangs-Einrichtung besteht aus einem Kondensator C1, einem Umschalter 1 zur Sende/Empfangs-Umschaltung, einem Impedanzwandler 2, einem Bandpassfilter 3, einem Hochfrequenz-Generator 4, einem Frequenzteiler 5, einem Pegel-Regelverstärker 6, einem Komparator 7, einem ersten Ein/Aus-Schalter 8, einem Phasenregelkreis 9, einem Differenzglied 10, einem Verstärker 11, einem zweiten Ein/Aus-Schalter 12, einem RC-Glied 13, einer Impulspegel-Aufbereitungsschaltung 14, einem Oder-Gatter 15, einem Oszillatorkondensator C2, einem Festwiderstand R1 und einem einstell-baren Widerstand R2.

Der Phasenregelkreis 9, auf englisch "phase locked loop (PLL)", ist ein an sich bekanntes handelsübliches Bauelement und besteht im Prinzip aus der Kaskadenschaltung eines Phasenkomparators 16 und eines steuerbaren Oszillators 17, auf englisch "voltage controlled oszillator (VCO)." Preisgünstig ist die Verwendung eines MC 14046B der Firma Motorola als Phasenregelkreis 9, was ausserdem noch den Vorteil eines niedrigen Stromverbrauchs hat. Derartige Phasenregelkreise haben allerdings Kennlinien, die sehr stark von einem Bauelement zum andern streuen. Eine Beschreibung des MC 14046B's findet sich z.B. im Datenbuch "the european cmos selection" der Firma Motorola, Phoenix, Arizona.

Die Impulspegel-Aufbereitungsschaltung 14 besteht z.B. aus zwei weiteren Komparatoren 18 und 19, deren Ausgänge auf ein Und-Gatter geführt sind. Das Und-Gatter ist z.B. ein Differenzverstärker 20. Die ersten Eingänge der beiden Komparatoren 18 und 19 sind miteinander verbunden und bilden den Eingang der Impulspegel-Aufbereitungsschaltung 14. Am zweiten Eingang der Komparatoren 18 und 19 liegt jeweils eine Referenzspannung $U_a$ bzw. $U_b$, so dass die beiden Kompa-ratoren 18 und 19 von unterschiedlichen Referenzspannungen $U_a$ bzw. $U_b$ angesteuert werden. Der Ausgang des Und-Gatters bzw. des Differenzverstärkers 20 bildet den Ausgang der Impulspegel-Aufbereitungsschal-tung 14.

./.

PA 2312

Die Sende/Empfangs-Einrichtung besitzt einen Signaleingang 21, der extern an einen Telephonleitungsdraht angeschlossen ist, zwei Steuereingänge 22 und 23, an denen die Steuersignale der beiden Ein/Aus-Schalter 8 und 12 anstehen, und einen Ausgang 24.

Der Hochfrequenz-Generator 4 und der Frequenzteiler 5 sind in der angegebenen Reihenfolge in Kaskade geschaltet und bilden zusammen einen Generator 4;5 zur Erzeugung der Sende-Trägerfrequenz.

Sowohl in der Telephonzentrale als auch in der Anruferstation ist die gleiche, in der Figur dargestellte Sende/Empfangs-Einrichtung vorhanden. Im Gegensatz zum Stand der Technik, in dem ein Generator 4;5 zur Erzeugung der Sende-Trägerfrequenz nur in der Telephonzentrale und ein Pegel-Regelverstärker 6 nur in der Anruferstation vorhanden sind, besitzt die in der Figur dargestellte Sende/Empfangs-Einrichtung einen derartigen Generator 4;5 und einen derartigen Pegel-Regelverstärker 6 sowohl in der Telephonzentrale als auch in der Anruferstation. Ein Bandpassfilter 3 ist dagegen auch im Stand der Technik sowohl in der Telephonzentrale als auch in der Anruferstation vorhanden.

Der am Signaleingang 21 angeschlossene Telephonleitungsdraht einerseits und der Ausgang des Generators 4;5 anderseits sind über den Umschalter 1 mit dem Eingang des Bandpassfilters 3 verbunden, dessen Ausgang seinerseits über den Pegel-Regelverstärker 6 mit dem Eingang des Phasenregelkreises 9 verbunden ist. Der Ausgang des Phasenregelkreises 9 ist seinerseits auf den Ausgang 24 der Sende/Empfangs-Einrichtung geführt. Der Ausgang des Bandpassfilters 3 ist ausserdem noch über den ersten Ein/Aus-Schalter 8 auf den Telephonleitungsdraht geschaltet. Der Ausgang des Pegel-Regelverstärkers 6 ist über den Komparator 7 auf den Eingang des Phasenregelkreises 9 geführt. Der Ausgang des Umschalters 1 ist über den Impedanzwandler 2 mit dem Eingang des Bandpassfilters 3 verbunden.

In der Praxis ist der Signaleingang 21 durch einen ersten Pol des Kondensators C1 gebildet, dessen zweiter Pol einerseits über einen

./.

PA 2312

Oeffnungskontakt des Umschalters 1 mit dem Eingang des Impedanzwandlers 2 und anderseits über den ersten Ein/Aus-Schalter 8 mit dem
Ausgang des Bandpassfilter 3 und dem Eingang des Pegel-Regelverstärkers 6 verbunden ist.

Der Ausgang des Generators 4;5 ist dagegen über einen Schliesskontakt des Umschalters 1 auf den Eingang des Impedanzwandlers 2 geschaltet.

Der Ausgang des Phasenregelkreises 9 ist über die Impulspegel-Aufbereitungsschaltung 14 mit dem Ausgang 24 der Sende/Empfangs-Einrichtung verbunden. Der Ausgang des Phasenregelkreises 9 ist ausserdem
noch auf den Eingang eines Reglers 10; 11; 12; 13; R2 geführt, der
in der angegebenen Reihenfolge aus der Kaskadenschaltung des Differenzgliedes 10, des Verstärkers 11, des zweiten Ein/Aus-Schalters 12,
des RC-Gliedes 13 und des einstellbaren Widerstandes R2 besteht,
wobei der einstellbare Widerstand R2 der Ausgangswiderstand des
Reglers 10; 11; 12; 13; R2 ist und an dem im Phasenregelkreis 9
enthaltenen steuerbaren Oszillator 17 angeschlossen ist. Der Minus-
Eingang des Differenzgliedes 10 bildet den Eingang des Reglers 10;
11; 12; 13; R2, während am Plus-Eingang des Differenzgliedes 10 eine
weitere Referenzspannung $U_{Ref}$ als Sollwert ansteht. Der Wert der
Referenzspannung $U_{Ref}$ wird gleich $(U_a + U_b)/2$ gewählt und beträgt
z.B. 1,7V. Der Ausgang des RC-Gliedes 13 ist mit dem Steuereingang
des einstellbaren Widerstandes R2 verbunden, der z.B. ein Feldeffekt-
Transistor (FET) ist.

Innerhalb des Phasenregelkreises 9 bildet ein erster Eingang des
Phasenkomparators 16 den Eingang des Phasenregelkreises 9, während
der Ausgang des steuerbaren Oszillators 17 auf den zweiten Eingang
des Phasenkomparators 16 rückgekoppelt ist. Die Verbindung zwischen
dem Ausgang des Phasenkomparators 16 und dem Eingang des steuerbaren
Oszillators 17 ist gleichzeitig der Ausgang des Phasenregelkreises
9. Der steuerbare Oszillator 17 und damit auch der Phasenregelkreis
9 sind extern und auf an sich bekannte Weise mit dem Oszillatorkondensator C2, dem Festwiderstand R1 und dem einstellbaren Widerstand
R2 über getrennte Anschlüsse beschaltet, wobei z.B. jeweils ein
Pol der beiden Widerstände R1 und R2 an Masse liegt.

PA 2312

Die sowohl in der Telephonzentrale als auch in der Anruferstation vorhandene und in der Figur dargestellte Sende/Empfangs-Einrichtung dient der Uebertragung von trägerfrequenten Telephontaximpulsen, die von der Telephonzentrale gesendet und von der Anruferstation empfangen werden, um anschliessend als Quittungsimpulse von der Anruferstation zurückgesendet und von der Telephonzentrale empfangen zu werden. Beim Fehlen von Quittungsimpulsen unterbricht die Telephonzentrale sofort das Telephongespräch. Sowohl in der Telephonzentrale als auch in der Anruferstation wird mit Hilfe des Generators 4;5 eine sehr konstante Sende-Trägerfrequenz erzeugt und mit Hilfe des Phasenregelkreises 9 die Empfangs-Trägerfrequenz bestimmt, wobei alle Trägerfrequenzen den gleichen Sollwert besitzen. Dabei dient die Sende-Trägerfrequenz jeweils dazu, kurzzeitig periodisch die Empfangs-Trägerfrequenz automatisch zu eichen. Die Bestimmung der Empfangs-Trägerfrequenz erfolgt dermassen, dass die Phase einer vom steuerbaren Oszillator 17 erzeugten Ausgangsfrequenz geregelt wird durch ihren Vergleich mit der Phase eines die Sende-Trägerfrequenz besitzenden Signals, das vom Generator 4;5 über die Kaskadenschaltung 1; 2; 3; 6; 7 geliefert wird, und durch anschliessendes Ansteuern des steuerbaren Oszillators 17 mit diesem Phasenvergleichssignal, das vom Phasenkomparator 16 erzeugt wird. Mit andern Worten: Mit Hilfe der Kaskadenschaltung 4;5;1;2;3;6;7 wird die Sende-Trägerfrequenz als Referenzfrequenz dem Eingang des Phasenregelkreises 9 zugeführt. Bei geschlossenem zweiten Ein/Aus-Schalter 12 regelt der Regler 10;11;12;13;R2 anschliessend den Wert des einstellbaren Widerstandes R2 und damit auch den Wert der Ausgangsfrequenz des steuerbaren Oszillators 17.

Der erste Steuereingang 22 der Einrichtung ist mit dem Steuereingang des ersten Ein/Aus-Schalters 8 und mit einem ersten Eingang des zweieingängigen Oder-Gatters 15 verbunden, während der zweite Steuereingang 23 auf den Steuereingang des zweiten Ein/Aus-Schalters 12 und den zweiten Eingang des Oder-Gatters 15 geführt ist, dessen Ausgang seinerseits mit dem Steuereingang des Umschalters 1 verbunden ist. Die Steuersignale der beiden Ein/Aus-Schalter 8 und 12 sind somit über das Oder-Gatter 15 auf den Steuereingang des Umschal-

./.

PA 2312

ters 1 geführt.

Die Schalter 1, 8 und 12 sind z.B. Halbleiterschalter. Das RC-Glied 13 ist L-förmig und als bekanntes Tiefpassfilter aufgebaut. Der hochfrequente Generator 4 ist in der Regel quarzgesteuert. Er bildet zusammen mit dem Frequenzteiler 5 einen 12,05 kHz-Generator, wenn die Frequenz der Taximpulse 12.05 Hz betragen soll. In diesem Fall besitzt der Generator 4 z.B. eine Frequenz von 1 MHz und der Frequenzteiler 5 ein Teilerverhältnis n = 1000/12,05 = 83.

Am ersten Steuereingang 22 der in der Figur dargestellten Sende/Empfangs-Einrichtung steht ein rechteckförmiges, binärwertiges Signal an, das einen Binärwert "0" während des Empfangs und einen Binärwert "1" während des Sendens besitzt. Dieses Signal steuert direkt den ersten Ein/Aus-Schalter 8 und über das Oder-Gatter 15 den Umschalter 1. Am zweiten Steuereingang 23 steht sowohl während der Empfangs- als auch während der Sendezeit ein periodisches, rechteckförmiges und binärwertiges Signal an, dessen Impulsdauer nur ein Bruchteil der Impulsdauer der Taximpulse ist. Dieses Signal steuert direkt den zweiten Ein/Aus-Schalter 12 und über das Oder-Gatter 15 den Umschalter 1. Mit anderen Worten: Unabhängig vom Senden und Empfangen wird der zweite Ein/Aus-Schalter 12 periodisch während eines Bruchteils der Impulsdauer der Taximpulse geschlossen und dadurch der Regler 10; 11; 12; 13; R2 kurzzeitig in Betrieb genommen zum erneuten Eichen des steuerbaren Oszillators 17. Während des Sendens ist der Ausgang des Generators 4;5 immer, während des Empfangs dagegen nur periodisch während der kurzen Zeit, in der der zweite Ein/Aus-Schalter 12 geschlossen ist, mit dem Eingang des Impedanzwandlers 2 verbunden. Während des Restes der Empfangszeit verbindet der Umschalter 1 den Kondensator C1 und damit auch die Telephonleitung mit diesem Eingang des Impedanzwandlers 2. Der erste Ein/Aus-Schalter 8 ist dagegen nur beim Senden und dann dauernd geschlossen.

Die in der Figur dargestellte Einrichtung befindet sich normalerweise in der Empfangsstellung. Die empfangenen Taximpulse werden durch die Kaskadenschaltung C1; 1; 2; 3; 6; 7; 9; 14 verarbeitet. In der

./.

Anruferstation wird jedesmal, wenn ein Taximpuls empfangen wurde, direkt anschliessend mit Hilfe des am ersten Steuereingang 22 der Sende/Empfangs-Einrichtung anstehenden Steuersignals kurz auf Senden umgeschaltet und ein Quittungsimpuls mit Hilfe der Kaskadenschaltung 4; 5; 1; 2; 3; 8; C1 zur Telephonzentrale gesendet. Nach Beendigung des Sendens wird wieder automatisch auf Empfang zurückgeschaltet. Während des Sendens läuft die Kaskadenschaltung 6; 7; 9; 14 im Leerlauf mit und dient nur dazu, periodisch kurzzeitig die Eichung der Ausgangsfrequenz des steuerbaren Oszillators 17 zu realisieren.

Die in der Telephonzentrale befindliche Sende/Empfangs-Einrichtung ist normalerweise ebenfalls auf Empfang geschaltet und schaltet jedesmal kurz auf Senden um, wenn ein Taximpuls von der Telephonzentrale zur Anruferstation gesendet werden muss. Dabei werden z.B. die verschiedenen Sende- und Empfangsfunktionen durch einen nichtdargestellten Mikrocomputer gesteuert.

Wie bereits erwähnt, werden empfangene Impulse durch die Kaskadenschaltung C1; 1; 2; 3; 6; 7; 9; 14 verarbeitet. Der Kondensator C1 dient der Eliminierung von Gleichstromkomponenten, die auf der Telephonleitung vorhanden sind. Da der Innenwiderstand des Umschalters 1 zwischen 300 Ohm und 2500 Ohm von Bauelement zu Bauelement sehr stark streut und beim Senden und Empfangen unterschiedliche Werte besitzen kann, ist zwischen dem Umschalter 1 und dem Bandpassfilter 3 der Impedanzwandler 2 geschaltet, so dass der Eingang des Bandpassfilters 3 durch eine Quelle angesteuert wird, dessen Innenwiderstand vorbestimmt konstant ist und somit ein stabiles Frequenzverhalten des Bandpassfilters 3 verursacht. Der Impedanzwandler 2 ist z.B. ein Verstärker mit dem Verstärkungsfaktor 1 und das Bandpassfilter 3 z.B. ein aktives Filter. Das Bandpassfilter 3 dient beim Empfang dazu, alle taximpulsfremden Signale, wie z.B. die Sprach- und Störsignale, zu eliminieren. Beim Senden ist die Kaskadenschaltung 4; 5; 1; 2; 3; 8; C1 in Betrieb. In diesem Fall dient das Bandpassfilter 3 der Umwandlung des rechteckförmigen, vom Generator 4;5 erzeugten Signals in eine reine Sinusspannung mit Verzerrungen, die kleiner sind als ein vorgegebener Wert.

Der Ausgangpegel des Bandpassfilters 3 kann in gewissen Ländern, in denen sehr lange Telephonleitungen vorkommen, z.B. in Schweden, zwischen 0 dBm und -38 dBm liegen. Für Werte dieses Ausgangspegels, die grösser als -38 dB sind, regelt der Pegel-Regelverstärker 6 beim Senden und beim Empfang den Ausgangspegel des Bandpassfilters 3 auf einen konstanten Wert und macht so den Betrieb des nachfolgenden Phasenregelkreises 9 unabhängig von dessen Schwankungen. In diesem Fall dient der Komparator 7 der Umwandlung von sinusförmigen Empfangssignalen in rechteckförmige Signale. Für einen Wert des Ausgangspegels, der niedriger als -44 dBm ist, dient der Komparator 7, der keine Hysterese besitzt, dazu ein Ausgangssignal Null zu erzeugen. In diesem Fall ist der Phasenregelkreis 9 ausser Betrieb und es werden keine Empfangsimpulse ausgewertet. Der Pegelbereich von -38 dBm bis -44 dBm ist ein von den PTT-Pflichtenheften zugestandenes Toleranzgebiet.

Die Empfangs-Trägerfrequenz wird mit Hilfe des Phasenregelkreises 9 bestimmt, dessen Phasenkomparator 16 die Phase des Ausgangssignals des Komparators 7 mit derjenigen des Ausgangssignals des steuerbaren Oszillators 17 vergleicht. Das Ausgangssignal des Phasenkomparators 16 stellt dann mit Hilfe von dessen spannungsgesteuerten Eingang die Frequenz des steuerbaren Oszillators 17 ein. Dessen Grundfrequenz ist durch die Werte der Widerstände R1 und R2 sowie durch den Wert des Oszillatorkondensators C2 bestimmt. Mit andern Worten: Der Phasenregelkreis 9 wandelt die Frequenz seines vom Komparator 7 gelieferten Eingangssignals in eine Ausgangsspannung des Phasenkomparators 16 um, die anschliessend die Ausgangsfrequenz des steuerbaren Oszillators 17 einstellt. Diese Ausgangsfrequenz ist somit abhängig von Frequenz und Phase des Eingangssignals des Phasenregelkreises 9 und von den Werten der Widerstände R1 und R2 sowie vom Wert des Oszillatorkondensators C2. Für ein bestimmtes Eingangssignal und gegebene Werte dieser Bauelemente kann, wie bereits erwähnt, der Wert der Ausgangsfrequenz des steuerbaren Oszillators 17 von Phasenregelkreis zu Phasenregelkreis sehr stark streuen. Daher wird als Widerstand R2 ein einstellbarer Widerstand verwendet, dessen Wert mit Hilfe des Reglers 10; 11; 12; 13; R2 so geregelt wird, dass der Wert der Grundausgangsfrequenz des steuerbaren Oszillators 17, unabhängig

./.

PA 2312

vom verwendeten Bauelement, immer einen konstanten Wert besitzt und somit die Streuungen des Bauelementes ausgeglichen werden. Der Phasenregelkreis 9, das Differenzglied 10, der Verstärker 11, der geschlossene zweite Ein/AusSchalter 12, das RC-Glied 13 und der einstellbare Widerstand R2 bilden zusammen einen Regelkreis, dessen Sollwert die Referenzspannung $U_{Ref}$ und dessen Istwert die Ausgangsspannung des Phasenregelkreises 9, also das bereits erwähnte Phasenvergleichssignal ist. Das Differenzglied 10 vergleicht das Phasenvergleichssignal mit der konstanten Referenzspannung $U_{Ref}$, indem es die Sollwert/IstwertDifferenz bildet, die nach ihrer Verstärkung durch den Verstärker 11 über das RC-Glied 13 den Wert des einstellbaren Widerstandes R2 und damit auch die Ausgangsfrequenz des steuerbaren Oszillators 17 in der richtigen Richtung verstellt, so dass während der Regelung der Sollwert $U_{Ref}$ und der Istwert am Minus-Eingang des Differenzgliedes 10 gleich werden und bleiben. Der Regler 10; 11; 12; 13; R2 ist unabhängig vom Senden und Empfang jeweils nur periodisch kurzzeitig während eines Bruchteils der Impulsdauer eines Taximpulses in Betrieb, nämlich wenn der zweite Ein/Aus-Schalter 12 geschlossen ist. Während diesen kurzen Zeiten wird die Ausgangsfrequenz des steuerbaren Oszillators 17 jeweils mit Hilfe der Ausgangsfrequenz des Generators 4;5 geeicht. Während keiner dieser Eichvorgänge kann die Einrichtung als Empfänger arbeiten. Dies ist beim Empfang kein grosser Nachteil, da die Eichvorgänge jeweils nur einen Bruchteil der Zeit eines Taximpulses dauern. Das Eichen bedingt jeweils eine bestimmte am Steuereingang des einstellbaren Widerstandes R2 anstehende, vom RC-Glied 13 gelieferte Steuerspannung. Während des Restes der Zeit, d.h. wenn der zweite Ein/Aus-Schalter 12 offen ist, wird der Wert dieser Steuerspannung und damit auch der Wert des einstellbaren Widerstandes R2 von dem im RC-Glied 13 enthaltenen Kondensator annähernd konstant gehalten. Das periodische Eichen dient dazu, eine teilweise langsame Entladung dieses Kondensators, welche nicht ganz zu vermeiden ist, periodisch zu kompensieren und so periodisch fortlaufend die Steuerspannung des einstellbaren Widerstandes R2 zu regenerieren.

Am Ausgang des Phasenregelkreises 9 und damit am Eingang der beiden Komparatoren 18 und 19 sind Gleichspannungsimpulse vorhanden, wobei jeder dieser Impulse zeitlich einem trägerfrequenten Taximpuls entspricht. Die Frequenz des Phasenregelkreises 9 schwankt beim Vorhandensein eines Taximpulses zwischen zwei Extremwerten, denen zwei Extremwerte $U_a$ und $U_b$ der Amplituden der Gleichspannungsimpulse entsprechen. Mit andern Worten: Ein Taximpuls ist zeitlich nur vorhanden, wenn die Amplitude des zugehörigen Gleichspannungsimpulses am Ausgang des Phasenregelkreises 9 in einem engen Bereich zwischen $U_a$ und $U_b$ liegt. Am Ausgang des Komparators 18 erscheint ein Logikwert "1" nur dann, wenn diese Amplitude grösser oder gleich $U_a$, und am Ausgang des Komparators 19 nur dann, wenn diese Amplitude grösser oder gleich $U_b$ ist. Der Differenzverstärker 20, der z.B. einen Verstärkungsfaktor 1 besitzt, realisiert die logische Funktion $a \cdot \overline{b}$, wenn a und b jeweils das Ausgangssignal des Komparators 18 und 19 ist. Statt eines Differenzverstärkers 20 kann auch ein digitales Und-Gatter verwendet werden, dessen einem Eingang ein Inverter vorgeschaltet ist zur Umwandlung von b in $\overline{b}$. Am Ausgang des Differenzverstärkers 20 und damit am Ausgang 24 der Sende/Empfangseinrichtung erscheinen somit nur Gleichspannungsimpulse, wenn die Amplitude der Gleichspannungsimpulse am Ausgang des Phasenregelkreises 9 Werte zwischen $U_a$ und $U_b$ besitzen. D.h.: Am Ausgang 24 erscheinen Gleichspannungsimpulse konstanter Amplitude, die zeitlich genau den Taximpulse entsprechen, und die anschliessend auf an sich bekannte und nicht dargestellte Weise weiter ausgewertet werden können, z.B. indem diese Gleichspannungsimpulse zur Ermittlung der Fernsprechgebühr binär oder dezimal gezählt werden mit anschliessender mechanischer oder optischer Anzeige des Zählwertes oder indem diese Gleichspannungsimpulse dazu dienen, einen noch vorhandenen Kredit in Telephonstationen mit Vorbezahlung zu reduzieren. Mit andern Worten: In der Impulspegel-Aufbereitungsschaltung 14 werden die Amplituden des vom Phasenkomparator 16 gelieferten Phasenvergleichssignal konstant gehalten durch Vergleich mit den beiden Referenzspannungen $U_a$ und $U_b$ und durch Erzeugung eines einzigen Ausgangspegel durch den Differenzverstärker 20, wenn die Amplitude des Phasenvergleichssignal zwischen den Werten der beiden Referenzspannungen $U_a$ und $U_b$ liegt.

Die Verwendung des Phasenregelkreises 9 und des Reglers 10, 11; 12; 13; R2 hat folgende Vorteile:

- Vermeidung der Verwendung von kritischen passiven oder aktiven

./.

PA 2312

Bauelementen, die jeweils während der Herstellung der Einrichtung im voraus abgestimmt werden müssen, was teuer ist und nachfolgende mögliche Parameteränderungen nicht berücksichtigen kann,

- Ersatz des manuellen Abstimmens durch automatisches Abstimmen,

- Vorhandensein einer sehr kleinen, z.B. in der Grössenordnung von 600 Hz bei einer Trägerfrequenz von 12 kHz liegenden Empfangsbandbreite, die leicht abzustimmen ist,

- Gewährleistung einer korrekten Funktion der Einrichtung auch bei sehr niedrigen Empfangspegeln, bis hin zu -38 dB, was den Betrieb in Ländern ermöglicht, die sehr lange Telephonleitungen besitzen, und

- niedriger Stromverbrauch, z.B. in der Grössenordnung von 1 mA, bei Verwendung eines CMOS-Phasenregelkreises vom Typ MC 14046 B.

Da die Sende/Empfangs-Einrichtung in der Telephonzentrale und in der Anruferstation genau gleich aufgebaut sind und unter anderem einen gleichen Quarz verwenden, sind der Sender und der Empfänger immer genau auf die gleiche Frequenz abgestimmt. Ist dies aus irgend einem Grund kurzzeitig nicht der Fall, wird die Frequenz automatisch auf ihren richtigen Wert geregelt durch die quarzgesteuerte Frequenz des als Eichgenerator arbeitenden Genrerators 4; 5. Dies geschieht fortlaufend periodisch bevor die Frequenzabweichung zu gross geworden ist und einen zulässigen Grenzwert überschreitet.

PATENTANSPRUECHE

1. Verfahren zum Senden und zum Empfangen von trägerfrequenten Telephontaximpulsen, die von einer Telephonzentrale gesendet und von einer Anruferstation empfangen werden, wobei die Anruferstation nach dem Empfang eines jeden Telephontaximpulses einen Quittungsimpuls zur Telephonzentrale zurücksendet und die Telephonzentrale bei einem Fehlen von Quittungsimpulsen das Telephongespräch unterbricht, dadurch gekennzeichnet, dass jeweils dauernd sowohl in der Telephonzentrale als auch in der Anruferstation eine Sende-Trägerfrequenz erzeugt und eine Empfangs-Trägerfrequenz bestimmt wird, wobei alle Trägerfrequenzen den gleichen Sollwert besitzen, und dass die Sende-Trägerfrequenz jeweils dazu dient, kurzzeitig periodisch die Empfangs-Trägerfrequenz automatisch zu eichen.

2. Verfahren nach Anspruch 1, dadurch gekennzeichnet, dass die Bestimmung der Empfangs-Trägerfrequenz dermassen erfolgt, dass die Phase einer von einem steuerbaren Oszillator (17) erzeugten Ausgangsfrequenz geregelt wird durch ihren Vergleich mit der Phase eines die Sende-Trägerfrequenz besitzenden Signals und durch anschliessendes Ansteuern des steuerbaren Oszillators (17) mit diesem Phasenvergleichssignal.

3. Verfahren nach Anspruch 2, dadurch gekennzeichnet, dass die Grundausgangsfrequenz des steuerbaren Oszillators (17) auf einen konstanten Wert geregelt wird mit Hilfe eines Reglers (10; 11; 12; 13; R2) durch einen Vergleich des Phasenvergleichssignals mit einer konstanten Referenzspannung ($U_{Ref}$) und durch Verstellen des Wertes eines am steuerbaren Oszillator (17) angeschlossenen einstellbaren Widerstandes (R2).

4. Verfahren nach Anspruch 3, dadurch gekennzeichnet, dass der Wert des einstellbaren Widerstandes (R2) periodisch jeweils nur kurzzeitig verstellt wird und für den Rest der Zeit konstant gehalten wird.                                                                ./.

5. Verfahren nach einem der Anspruch 2 bis 4, dadurch gekennzeichnet, dass die Amplituden des Phasenvergleichssignal konstant gehalten werden durch Vergleich mit zwei Referenzspannungen ($U_a$, $U_b$) und durch Erzeugung eines einzigen Ausgangspegels, wenn die Amplitude des Phasenvergleichssignal zwischen den Werten der beiden Referenzspannungen ($U_a$, $U_b$) liegt.

6. Einrichtung zur Durchführung des Verfahrens nach einem der Ansprüche 1 bis 5 mit Bandpassfiltern, mit mindestens einem Pegel-Regelverstärker und mit mindestens einem Generator zur Erzeugung der Sende-Trägerfrequenz, dadurch gekennzeichnet, dass sowohl in der Telephonzentrale als auch in der Anruferstation je eine gleiche Sende/Empfangseinrichtung vorhanden ist, dass jede dieser Sende/Empfangs-Einrichtungen neben einem Bandpassfilter (3) einen Generator (4;5) zur Erzeugung der Sende-Trägerfrequenz und einen Pegel-Regelverstärker (6) besitzt, dass jede Sende/Empfangs-Einrichtung ausserdem noch mindestens einen Umschalter (1) zur Sende/Empfangs-Umschaltung und einen Phasenregelkreis (9) zur Bestimmung der Empfangs-Trägerfrequenz enthält, und dass ein Telephonleitungsdraht einerseits und der Ausgang des Generators (4;5) anderseits über den Umschalter (1) mit dem Eingang des Bandpassfilters (3) verbunden sind, dessen Ausgang seinerseits über den Pegel-Regelverstärker (6) mit dem Eingang des Phasenregelkreises (9) verbunden ist, dessen Ausgang seinerseits auf den Ausgang (24) der Sende/Empfangs-Einrichtung geführt ist.

7. Einrichtung nach Anspruch 6, dadurch gekennzeichnet, dass der Ausgang des Bandpassfilters (3) über einen Ein/Aus-Schalter (8) auf den Telephonleitungsdraht geschaltet ist.

8. Einrichtung nach Anspruch 6 oder 7, dadurch gekennzeichnet, dass der Ausgang des Pegel-Regelverstärkers (6) über einen Komparator (7) auf den Eingang des Phasenregelkreises (9) geführt ist.

9. Einrichtung nach einem der Ansprüche 6 bis 8, dadurch gekennzeichnet, dass der Ausgang des Umschalters (1) über einen Impedanz-

./.

wandler (2) mit dem Eingang des Bandpassfilters (3) verbunden ist.

10. Einrichtung nach einem der Ansprüche 6 bis 9, dadurch gekennzeichnet, dass der Ausgang des Phasenregelkreises (9) über eine Impulspegel-Aufbereitungsschaltung (14) mit dem Ausgang (24) der Sende/Empfangs-Einrichtung verbunden ist.

11. Einrichtung nach Anspruch 10, dadurch gekennzeichnet, dass die Impulspegel-Aufbereitungsschaltung (14) zwei Komparatoren (18, 19) enthält, deren Ausgänge auf ein Und-Gatter geführt sind und die beiden von unterschiedlichen Referenzspannungen ($U_a$, $U_b$) angesteuert sind.

12. Einrichtung nach Anspruch 11, dadurch gekennzeichnet, dass das Und-Gatter ein Differenzverstärker (20) ist.

13. Einrichtung nach einem der Ansprüche 6 bis 12, dadurch gekennzeichnet, dass der Ausgang des Phasenregelkreises (9) auf den Eingang eines Reglers (10; 11; 12; 13; R2) geführt ist, dessen Ausgangswiderstand ein einstellbarer Widerstand (R2) ist, der an einem im Phasenregelkreis (9) enthaltenen steuerbaren Oszillator (17) angeschlossen ist.

14. Einrichtung nach Anspruch 13, dadurch gekennzeichnet, dass der Regler (10; 11; 12; 13; R2) in der angegebenen Reihenfolge aus der Kaskadenschaltung eines Differenzgliedes (10), eines Verstärkers (11), eines weiteren Ein/Aus-Schalters (12), eines RC-Gliedes (13) und des einstellbaren Widerstandes (R2) besteht, wobei der Minus-Eingang des Differenzgliedes (10) den Eingang des Reglers (10; 11; 12; 13; R2) bildet, während am Plus-Eingang des Differenzgliedes (10) eine Referenzspannung ($U_{Ref}$) als Sollwert ansteht.

15. Einrichtung nach Anspruch 5, dadurch gekennzeichnet, dass die Steuersignale der beiden Ein/Aus-Schalter (8, 12) über ein Oder-Gatter (15) auf den Steuereingang des Umschalters (1) geführt sind.

./.

PA 2312